# EUROPÄISCHE PATENTSCHRIFT

(11) **EP 4 112 958 B1**
(45) Veröffentlichungstag und Bekanntmachung des Hinweises auf die Patenterteilung: **25.03.2026**
(21) Anmeldenummer: 22180163.2
(22) Anmeldetag: 21.06.2022
(51) Int. Cl.: F16C 33/14, C23C 22/62, C23C 22/73, C23C 22/50

(54) **LAGERBAUTEIL**
BEARING COMPONENT
COMPOSANT PALIER

(30) Priorität: 29.06.2021 DE 102021206744
(43) Veröffentlichungstag der Anmeldung: 04.01.2023
(73) Patentinhaber: Aktiebolaget SKF, 415 50 Göteborg (SE)
(72) Erfinder: von Schleinitz, Thilo, 97422 Schweinfurt (DE); Bruckhaus, Christina, 91126 Rednitzhembach (DE)
(74) Vertreter: Kuhstrebe, Jochen

(56) Entgegenhaltungen:
- WO-A1-2021/139973
- WO-A2-2009/050090
- DE-A1- 102011 006 296

## Beschreibung

Die vorliegende Erfindung betrifft ein Lagerbauteil mit einer Brünierschicht gemäß dem Oberbegriff von Patentanspruch 1. Des Weiteren betrifft die vorliegende Erfindung ein Verfahren zum Herstellen eines solchen Lagerbauteils gemäß Patentanspruch 6.

Es ist bekannt, auf Lagerbauteilen, z.B. Wälzlagerringen oder Wälzkörpern, Brünierungen aufzubringen, um einen Schutz der Lagerbauteile vor verschiedenen wälzlagertypischen und an der Oberfläche auftretenden Schäden zu erreichen. Dabei wird das Eisen der Oberfläche des Lagerbauteils in ein oder mehrere oxidierende Bäder getaucht. Hierdurch entsteht eine fest mit dem Grundwerkstoff verbundene Konversionsschicht, die die Abmessungen des Lagerbauteils im Wesentlichen nicht beeinflusst. Ein gattungsgemäßes Lagerbauteil ist nach dem Oberbegriff des Anspruchs 1 aus DE 10 2011 006296 A1 bekannt.

Der Verschleißwiderstand einer solchen Lagerbrünierung ist bei sehr verschleißintensiven Anwendungen teilweise zu gering, so dass die Brünierung schon nach einem Probelauf oder Einlauf geschwächt oder abgetragen wird, während sie aber in anderen günstigeren Anwendungen über Jahre standfest ist. Der beobachtete Abtrag der Schicht steht oftmals in Zusammenhang mit Gleitanteilen. Während die Schicht im reinen Rollkontakt nur geglättet, aber nicht abgetragen wird, kann sie im Gleitkontakt nach kürzester Zeit entfernt sein, da sie eine geringere Härte aufweist als der gehärtete Lagerstahl der Gegenfläche.

Es ist deshalb eine Aufgabe der vorliegenden Erfindung, ein Lagerbauteil mit einem erhöhter Verschleißwiderstand bereitzustellen.

Diese Aufgabe wird durch ein Lagerbauteil gemäß Patentanspruch 1 sowie ein Verfahren zum Herstellen eines Lagerbauteils gemäß Patentanspruch 6 gelöst.

Allgemein können Beschichtungen durch Einlagern von zusätzlichen Stoffen günstig beeinflusst werden. Bislang war bekannt, eine Brünierschicht auf einem Lagerbauteil herzustellen und anschließend eine weitere Schicht mit verschiedenen Zusatzelementen, wie beispielweise Wolframverbindungen, oder auch Polymeren, auf der Brünierschicht aufzubringen, um diese zu verstärken oder durch die Schicht weitere Eigenschaften bereitzustellen. Dies hat jedoch den Nachteil, dass die zusätzlichen Elemente eine separate Schicht darstellen, die nicht in der Lage ist, Eigenschaften der Brünierschicht selbst, wie z.B. den Verschleißwiderstand, zu verbessern.

Es wurde nun jedoch durch den Erfinder festgestellt, dass es möglich ist, die Eigenschaften der Brünierschicht zu verbessern, indem eine Art Legierung der Brünierschicht vorgenommen wird. Durch eine solche Legierung können die Eigenschaften der bei der Brünierung entstehenden Schicht angepasst, insbesondere verbessert, werden.

Es wird daher ein Lagerbauteil vorgeschlagen, welches eine Brünierschicht aufweist. Bei dem Lagerbauteil kann es sich insbesondere um ein Lagerbauteil eines Wälzlagers oder Gleitlagers, wie beispielsweise einen Lagerring oder Wälzkörper, handeln.

Um eine widerstandfähige Brünierschicht bereitzustellen, werden metallische Zusatzelemente in die Struktur der Brünierschicht eingebunden. Die metallischen Zusatzelemente sind dabei nicht als separate Schicht vorgesehen, die eigene Eigenschaften bereitstellt, sondern sie sind direkt in die Brünierschicht eingebettet, d.h. in der Struktur der Brünierschicht integriert. Auf diese Weise passen sie die Eigenschaften der Brünierschicht an, anstatt weitere Eigenschaften der Zusatzelemente hinzuzufügen.

Durch die Herstellung als legierte Brünierschicht sind die metallischen Zusatzelemente im Wesentlichen über die radiale Erstreckung der Brünierschicht oder zumindest über einen signifikanten Teil der radialen Schichterstreckung eingebunden. Im Gegensatz zu bisherigen Herstellungsverfahren, bei denen additive Elemente nur in den radialen Randbereichen der Brünierschicht, d.h. auf der Brünierschicht oder in ihren oberflächenoffenen Kavitäten und Poren, vorhanden sind, sind die hier vorgesehenen metallischen Zusatzelemente in der radialen Erstreckung der Brünierschicht zu finden, d.h. innerhalb der Schichtstruktur und nicht nur auf der Schicht. Auf diese Weise tragen die metallischen Zusatzelemente über die radiale Erstreckung der Brünierschicht zu einer Verbesserung von deren Eigenschaften bei.

Eine Brünierschicht verliert bei Wälzlagern im Rahmen des Einlaufens notwendig und beabsichtigt etwa 50 % ihrer Oxidationstiefe, während die verbleibenden 50 % dann üblicherweise stabil und langfristig als verbleibende Schicht die Oberfläche schützen. Somit ist es nur notwendig, eine Veränderung der Schichteigenschaften bis in mehr als 50 % der Oxidationstiefe zu erreichen, um die nach dem Einlauf verbleibende Schicht in ihren Eigenschaften zu modifizieren. Eine Veränderung der Schichteigenschaften über die vollständige Oxidationstiefe der Brünierschicht ist wünschenswert und idealerweise vorhanden, ist aber für die verbesserte Standfestigkeit der Schicht nicht zwingend erforderlich.

Gemäß einer Ausführungsform sind die metallischen Zusatzelemente mit einem Anteil zwischen 0,1 und 1%, insbesondere zwischen 0,3 und 0,7% (Masseprozente), der Brünierschicht vorgesehen. Durch diese geringen Anteile von metallischen Zusatzelementen kann erreicht werden, dass diese nicht durch ihre eigenen Eigenschaften als Werkstoff die Gesamteigenschaften der Brünierschicht verändern, sondern stattdessen die Eigenschaften der eigentlichen Brünierschicht anzupassen. Die verwendeten Massenprozente haben Ähnlichkeit mit diversen Legierungselemente-Anteilen in Stahl, bei denen ebenfalls, trotz geringer Konzentration deutlich unter 1 %, wesentliche Eigenschaftsveränderungen erreicht werden.

Die geringe Konzentration der Zusatzelemente erlaubt einerseits einen ressourcensparenden Beschichtungsprozess ohne hohen Chemikalieneinsatz, ohne hohe Verluste, und ohne hohe Kosten. Andererseits ist auch die Pflege des Brünierbads und Analytik einfach.

Würde man Zusatzelemente als "Inseln" in eine Schicht einlagern, um durch die spezifischen Eigenschaften der Zusatzelemente die Gesamteigenschaften der Schicht signifikant zu verändern, müsste man mehrere Masseprozente an Zusatzelementen in die Schicht einbringen. Solche massiven Inselbildungen könnten die homogenen Eigenschaften der Schicht stören, die innere Stabilität gefährden, und würden einen hohen Materialeinsatz an Zusatzelementen im Beschichtungsprozess erfordern.

Wenn man Zusatzelemente nicht auf einer Schicht, sondern in einer Schicht positionieren will, ist es daher ideal, wenn sich die Zusatzelemente in der Schicht durch strukturelle Verbindungen, beispielsweise im Kristallgitteraufbau, oder durch chemische Reaktionen verteilen und nicht als inselförmig getrennte Agglomerate vorliegen. Dies wird durch das hier beschriebene Lagerbauteil erreicht. Gleichzeitig ermöglicht es der Einbau der metallischen Zusatzelemente in die Grundstruktur der Schicht, trotz sehr niedriger Konzentrationen, relevante Eigenschaftsverbesserungen zu erzielen.

Gemäß einer weiteren Ausführungsform sind die metallischen Zusatzelemente mit einem nach radial außen ansteigenden Anteil in der Brünierschicht eingebunden.

Eine Brünierung entsteht durch Eintauchen des Lagerbauteils in ein oder mehrere Brünierbäder. Während des Eintauchens erfolgt eine andauernde Anlösung von Eisen bzw. Eisenoxiden, die in und auf dem Material des Lagerbauteils, z.B. Stahl, enthalten sind, und deren ständige Wiederanlagerung und Umstrukturierung. Im Unterschied zu einer Zweischichtlackierung, bei der eine zweite Schicht auf die unveränderlich statische erste Schicht aufgebracht würde, formt bei einer Zweibadbrünierung das zweite Bad auch die bereits abgeschiedene erste Oxidationstiefe nochmals um. Die Oxidschicht wird dichter und stabiler, der Anteil an freiem FeO sinkt zugunsten von Fe3O4. Je tiefer die Schichtbereiche liegen, desto langsamer erfolgt die Umformung, bis sie zum Erliegen kommt und meist ihren final gewünschten Oxidationszustand erreicht hat.

Die metallischen Zusatzelemente, die beispielsweise durch eine Vortauchlösung auf das Lagerbauteil aufgebracht werden, werden nicht nur in der Brünierschicht eingelagert, sondern unterliegen auch einer Auflösungsreaktion. Das bedeutet, dass sie bei der Umstrukturierung des Bereiches, in den sie eingelagert sind, teilweise wieder ins Brünierbad verloren gehen können.

Wird das Lagerbauteil während der Schichtbildung erneut in eine Suspension mit metallischen Zusatzelementen getaucht, insbesondere zwischen den Brünierbädern, erhöht sich die Konzentration der metallischen Zusatzelemente von der Schichtoberfläche her wieder und die metallischen Zusatzelemente diffundieren in die im weiteren Umbau befindliche Brünierschicht ein. Hierbei ergibt sich ein Konzentrationsgefälle, denn je tiefer ein Schichtbereich liegt, umso schlechter kann er mit metallischen Zusatzelementen "wiederaufgefüllt" werden. Im Endergebnis ergibt sich eine Brünierung mit einem messbaren Konzentrationsgefälle. Die tiefsten Bereiche der Schicht weisen einen geringeren Gehalt an metallischen Zusatzelementen auf, zur Oberfläche hin wird es immer mehr. Hierbei liegen die metallischen Zusatzelemente jedoch nicht auf der Oberfläche auf, sondern sie befinden sich in der Brünierschicht, vorwiegend in den oberen Bereichen, mit einem Konzentrationsgefälle nach innen.

Dies unterscheidet sich von einer herkömmlichen brünierten Oberfläche, bei der additive Elemente nur auf der Oberfläche aufliegen und höchsten im Betrieb in diese eingedrückt werden oder sich in den nach außen offenen Poren der Brünierschicht ablagern. Im Gegensatz dazu sind die metallischen Zusatzelemente bei dem hier vorgeschlagenen Lagerbauteil nachweislich in die Gefügestruktur der Brünierschicht eingebracht, mit einer maximalen Konzentration nahe der Brünierschichtoberfläche, aber nicht oberhalb von dieser.

Gemäß einer weiteren Ausführungsform sind die metallischen Zusatzelemente dazu ausgebildet, die Eigenschaften der Brünierschicht anzupassen. Wie bereits oben erläutert, werden die Eigenschaften der Zusatzelemente nicht direkt verwendet, sondern die metallischen Zusatzelemente dienen dazu, die bereits vorhandenen Eigenschaften der Brünierschicht anzupassen, insbesondere zu verbessern.

In Versuchen hat sich gezeigt, dass weder bei der Farbe noch bei der rasterelektronenmikroskopischen Oberflächenstruktur oder Porosität die mit metallischen Zusatzelementen legierte Schicht einen relevanten Unterschied zu einer herkömmlichen Brünierschicht zeigt. Auch der Korrosionsschutz war ebenfalls im Rahmen der Ermittlungsgenauigkeit identisch, genau wie die Reibung. Im Rollkontakt zeigte sich kein signifikanter Unterschied der Verschleißspur. Bei Gleittests hingegen zeigten sich wiederholbare und signifikante Unterschiede zwischen dem hier beschriebenen Lagerbauteil und einem Lagerbauteil mit einer herkömmlichen Brünierschicht.

So hat sich gezeigt, dass sich die Verschleißspur für das hier beschriebene Lagerbauteil bei allen Belastungen im zugrunde gelegten Versuchsaufbau erheblich reduzierte:
- bei 0,9 GPa von 0,85 µm auf 0,50 µm (-41 %)
- bei 1,1 GPa von 1,50 µm auf 0,85 µm (-43 %)
- bei 1,4 GPa von 2,15 µm auf 1,20 µm (-44 %)

Bei der Untersuchung mittels Nanoindentationsversuchen haben sich folgende Verbesserungen der hier beschriebenen legierten Brünierschicht im Vergleich zu herkömmlichen Brünierschichten ergeben:
- Härtezunahme der legierten Brünierung an glatten polierten Oberflächen auf 227 %
- Härtezunahme der legierten Brünierung an geschliffenen rauen Oberflächen auf 192 %
- Zunahme des Elastizitätsmodules an glatten polierten Oberflächen auf 220 %
- Zunahme des Elastizitätsmodules an geschliffenen rauen Oberflächen auf 229 %

Zusammengefasst kann durch die hier beschriebene Brünierschicht, die mit metallischen Zusatzelementen legiert wurde, die doppelte Härte, der doppelte Elastizitätsmodul und der halbe Gleitverschleiß gegenüber herkömmlichen Brünierschichten erreicht werden. Hierbei wird jedoch, wie bereits erläutert, keine separate Schicht durch die metallischen Zusatzelemente bereitgestellt, sondern die "weiche" Brünierschicht, die unter Gleitbedingungen zu einer schnellen Abnutzung tendiert, wird in ihrer relativ geringen Härte und Widerstandsfähigkeit verdoppelt. Die für den Wälzkontakt benötigten Eigenschaften werden dabei nicht beschädigt.

Die legierte Brünierschicht zeigt insbesondere verbesserte Eigenschaften bei vorliegenden Gleitanteilen. Da bei vielen Wälzlagern je nach Bauart und Anwendung mehr oder weniger hohe Gleitanteile zusätzlich zur Abrollbewegung vorliegen, ist der verbesserte Verschleißwiderstand bei gleitender Bewegung relevant für Wälzlager. So können Brünierungen bei Wälzlagern nicht nur zur Verbesserung der Performance der Laufbahnen eingesetzt werden, sondern auch um das gleitende Verschieben des Außenringes im Gehäuse bei Loslagern schonender zu gestalten.

Gemäß der Erfindung weisen die metallischen Zusatzelemente Titan und/oder Titanoxid und/oder Titaneisenoxid auf.

Bei einer Brünierung handelt es sich um Fe3O4 (Magnetit), dessen Kristallstruktur eine kubische Symmetrie hat. Bei der Wahl der metallischen Zusatzelemente sollte insbesondere beachtet werden, eine dem Magnetit möglichst ähnliche, insbesondere eisenoxidbasierende, Verbindung hinzuzufügen oder entstehen zu lassen. Diese sollte etwa die gleiche Härte und Eigenschaften haben, jedoch keine kubische, sondern beispielsweise eine trigonale Gitterstruktur aufweisen. Haben die Zusatzelemente zwar ähnliche Eigenschaften, aber eine andere Gitterstruktur, führt die Zusammenführung der unterschiedlichen Gitterstrukturen zu einer neuen und zwangsläufig leicht verzerrten Anordnung. Die Störungen in der Gitterstruktur und den verfügbaren Gleitebenen können die Härte und den Elastizitätsmodul der Gesamtschicht erheblich verschieben. Die tatsächliche Struktur einer nur vereinfacht als Fe3O4 beschriebenen Brünierung ist ein wesentlich größeres Strukturgebilde der ungefähren Beschreibung Fe11O16 und kann daher durch Anlagerung sehr geringer Anteile anderer verwandter Gitterstrukturen besonders an der Fe-Fehlstelle effektiv verspannt werden. Ähnliche Effekte sind aus der Kombination von Fe3O4 mit einem Fe2O3-Überschuss messbar.

Als Zusatz in der Schichtstruktur kann beispielsweise Ilmenit (FeTiO3) verwendet werden, das alle gewünschten Eigenschaften besitzt. Es ist schwarz, wie es bei einer Brünierung üblich ist. Es hat eine ähnliche Mohs-Härte wie Magnetit. Es ist ebenfalls ein Eisenoxid. Es hat eine trigonale Struktur und damit das Potential, eine kubisch aufgebaute Schicht im Gitter zu verspannen und zu härten. Es hat Ti als gut detektierbares Element, das Aufschluss gibt über den Ilmenit-Gehalt der Schicht. Da Ilmenit nur ein Fe-Atom in seiner Struktur verwendet, kann es in allen denkbaren Konzentrationen die parallel ablaufende Fe3O4-Bildung nicht behindern. Der Sauerstoffüberschuss aus dem Nitrit des Brünierbads kann jederzeit den Bildungsbedarf des Ilmenits decken.

Es sind weitere Mischoxide vorstellbar. Über das Ilmenit (FeTiO3) hinaus sind auch FeTiO4 (Eisen-II-Titanat) und FeTiO5 in der Brünierschicht möglich. Es kann somit bei Sauerstoffüberschuss zusätzlich zu den drei Eisenoxiden FeO, Fe2O3 und Fe3O4 eine Dreiergruppe von Eisentitanoxiden vorliegen, nämlich FeTiO3, FeTiO4 und FeTiO5.

Bevorzugt können Mischoxide mit Mischoxiden kombiniert werden. Hierdurch wird bei nicht genau eingehaltenem Sauerstoffverhältnis im Brünierbad ein eng verwandtes Eisentitanoxid erzeugt, statt die Reaktion in unerwünschte andere Richtungen abdriften zu lassen. Jedes der Eisentitanoxide ist geeignet, das Magnetit der Brünierschicht strukturell zu verzerren.

Es können verschiedene Titanverbindungen für das Vortauchen verwendet werden. Diese sind alle wasserunlöslich, weshalb über Lufteinblasung eine Suspension im Tauchbad für die metallischen Zusatzelemente erzeugt wird, wie es bei z.B. Aktivierungen vor dem Phosphatieren (mit teils anderen Feststoffen) üblich ist. Analog zu einer solche Aktivierung wird mindestens ein Vortauchbad mit einer wässrigen Suspension in der Beschichtungsanlage vorgehalten, in welches die Werkstücke vor dem ersten Brünierschritt und eventuell wiederholt als kurze Unterbrechung während der Brünierdauer eingetaucht werden.

Eine extrem kostengünstige und ungiftige Titanverbindung mit hoher weltweiter Marktverfügbarkeit ist Titandioxid, welches zudem reaktionsträge ist und zu keinen unerwünschten Nebenreaktionen führt. Bei der Anwendung in einer Suspension besteht keine Gefährdung hinsichtlich Inhalation. Für die Zubereitung der Suspension werden geeignete Partikelgrößen spezifiziert, insbesondere KA 100 (0,25-0,35 mm).

Titandioxid liegt wahlweise in den Strukturen Rutil, Anatas und Brookit vor, die nicht gleichwertig in der Anwendung sind. Industriell wird das Pigment üblicherweise über die Farbstärke und den Weissgrad definiert. Bevorzugt kann für die Suspension Rutil verwendet werden, welches gleichzeitig die höchste Farbstärke hat und die weitest verbreitete Struktur im Handel darstellt. Somit wird für den Vortauchprozess vorzugsweise ein Rohstoff mit Farbstärke mind. 1280 definiert. Weitere zu spezifizierende Rohstoffeigenschaften für eine erfolgreiche Anwendung können beispielsweise die Ölzahl (vorzugsweise max. 25g/100g), der Siebrückstand 45 (vorzugsweise <0,015 %) und der Reinheitsgehalt (vorzugsweise >98 %) sein.

Da Titandioxid einen Einfluss auf das Oxidationsverhalten von Eisen hat, kann dieses bevorzugt als metallisches Zusatzelement verwendet werden. Titandioxid (TiO2) verändert vorteilhaft die ionische Diffusion des Sauerstoffanions O mit Eisen und Eisenoxid. Hierbei wird eine äußere Fe-Kation-Diffusion durch eine innere O-Anion-Diffusion ersetzt. Dies bedeutet, dass die Zugabe von TiO2 nicht nur die Diffusionsfähigkeit des Sauerstoffanions in Substrat und Brünierschicht verbessert und die Schichtbildung unterstützt, sondern dass der dominierende Ionentransfermechanismus für die Oxidation von Eisen zugunsten einer effizienteren Variante ausgetauscht wird.

Es wurde festgestellt, dass der Einbau von Titanverbindungen in die Brünierschicht einem natürlichen Masseverhältnis folgt. Die Brünierschicht lagert typischerweise etwa 0,4-0,7 % Titan ein. Wird die Vortauchsuspension mit stark erhöhter Titandioxid-Konzentration betrieben, zum Beispiel mit doppelter Konzentration, ergibt sich dennoch das gleiche Ergebnis. Dies ist darauf zurückzuführen, dass der Einbau von Titanmischoxiden in die strukturelle Fe11O16-Matrix einem bestimmten Verhältnis folgt, wie auch eine chemische Reaktion nur bestimmte Anteile der Reaktionspartner verarbeiten kann. Diese Tatsache erlaubt eine besonders einfache und stabile Badführung der Vortauchsuspension, da diese mit einem Konzentrationsüberschuss als chemischer Vorrat gefahren werden kann und trotz veränderlicher Konzentration immer das gleiche Ergebnis erzielt wird.

Während die nominelle ideale Konzentration von Titandioxid in der Vortauchsuspension auf 10 g/Liter festgelegt wurde, konnte der ebenso funktionsfähige Toleranzbereich auf 5-20 g/Liter gelegt werden, ohne dass es zu Ergebnisvariationen gekommen wäre.

Die Temperatur der Vortauchsuspension führt ebenfalls nicht zu Veränderungen im Ergebnis. Raumtemperatur ebenso wie eine beheizte erhöhte Temperatur produzieren die gleiche adhäsive Keimanlagerung mit gleicher Intensität und ähnlicher Haftung. Um die Prozess-Stabilität des Vortauchens sicherzustellen, sollte neben einer stabilen Suspension durch ständige und hinreichende Lufteinblasung über Düsenrohre am Behälterboden zum Zwecke der intensiven Umwälzung und des In-Schwebe-Haltens, auf einen Badansatz mit VE-Wasser oder anderweitig entmineralisiertem Wasser sowie eine ausreichende Verweildauer der Werkstücke in der Suspension geachtet werden. Für die erste adhäsive Keimanlagerung auf blanker Stahloberfläche wird eine untergetauchte Verweildauer von typischerweise 2 bis 5 Minuten benötigt. Bei einer bereits bestehenden Brünierschicht liegt eine veränderte Oberflächenenergie und -struktur vor und die Zwischentauchvorgänge können kürzer ausfallen. Durch die Möglichkeit kürzerer Zwischentauchvorgänge kann vermieden werden, dass hierbei die Kerntemperatur der Werkstücke relevant absinkt, was den Gesamtprozess im Ablauf verlängern würde.

Gemäß einem weiteren Aspekt wird ein Verfahren zum Herstellen eines Lagerbauteils, wie es oben beschrieben ist, vorgeschlagen. Das Verfahren weist die folgenden Schritte auf: Anlagern von metallischen Zusatzelementen auf dem Lagerbauteil und Eintauchen des Lagerbauteils mit den angelagerten metallischen Zusatzelementen in eine Brünierlösung, wobei die metallischen Zusatzelemente in der Struktur der Brünierschicht und vorzugsweise über die annähernd komplette radiale Erstreckung der Brünierschicht eingebunden werden.

Insbesondere kann das Anlagern der metallischen Zusatzelemente durch Eintauchen in eine Vortauchlösung erfolgen. Wird Titandioxidpulver als metallisches Zusatzelement verwendet, kann dieses mit einer Partikelgröße von 0,25-0,35 mm in Vortauchlösung als Suspension vorliegen. Wie sich herausgestellt hat, sind dabei etwa 10 g/Liter ausreichend. Höhere Konzentrationen sind möglich, aber nicht nötig.

Durch eine solche einfache und kostengünstige Vortauchlösung kann zuverlässig eine legierte Brünierung erzeugt werden kann, die trotz sehr geringen Gehaltes an Legierungsbestandteilen, d.h. Bestandteilen von metallischen Zusatzelementen, in mehreren Eigenschaften eine Verdopplung ihrer Fähigkeiten zeigt, wie oben beschrieben ist. Dies führt dazu, dass mit einer solchen legierten Brünierschicht in Wälzlager-Anwendungen mit erhöhten Gleitanteilen keine frühzeitigen Verluste der Brünierschicht auftreten.

Gemäß einer weiteren Ausführungsform werden die Schritte des Anlagerns von metallischen Zusatzelementen und Eintauchens in die Brünierlösung wiederholt, wobei das Eintauchen in die Brünierlösung jeweils der auf ein Anlagern folgende Schritt ist. Des Weiteren kann vor dem Anlagern der metallischen Zusatzelemente zunächst ein (mehrstufiges) Entfetten und Spülen des Lagerbauteils erfolgen.

Ein beispielhaftes Verfahren mit mehreren Vortauch- bzw. Zwischentauch- und Brüniervorgängen, kann wie folgt ablaufen:
- Entfetten, Reinigen und Spülen der Werkstoffoberflächen, ggfs. mit weiteren Aktivierungshilfsmitteln
- Vortauchen in eine Titandioxidsuspension, die bei Raumtemperatur ebenso wie bei erhöhter Temperatur vorgehalten werden kann,
- Überführen ins erste Brünierbad,
- optional während des ersten Brünierens eine Unterbrechung, z.B. nach 10 Minuten, zum erneuten Abschrecken und Zwischentauchen in derselben Titandioxidsuspension, mit sofortigem Zurückheben und Weiterbrünieren,
- nach Abschluss des ersten Brünierens, Abschrecken in möglichst kühlem Wasser,
- Vortauchen in eine weitere Titandioxidsuspension, die bei Raumtemperatur ebenso wie bei erhöhter Temperatur vorgehalten werden kann. Dies kann ein zweiter Vortauchbehälter sein, um den Anlagen nicht zu behindern,
- Überführen in ein zweites Brünierbad,
- optional während des zweiten Brünierens eine Unterbrechung, z.B. nach 10 Minuten, zum erneuten Abschrecken und Zwischentauchen in derselben Titandioxidsuspension, mit sofortigem Zurückheben und Weiterbrünieren,
- nach Abschluss des zweiten Brünierens, Abschrecken in möglichst kühlem Wasser,
- abschließend diverse kalte und heiße Spülbäder, dann Bearbeiten mit Entwässerungsfluid und Konservieröl.

Das Verfahren kann bei Bedarf um einen dritten Vortauchbehälter und ein drittes Brünierbad sowie eine dritte Abschreckspüle erweitert werden.

Gegenüber einer in der Wälzlagerindustrie typischerweise verwendeten modifizierten Brünieranlage zum tribologischen Zweibad-Brünieren werden für das legierte Brünieren lediglich zwei weitere Behälter benötigt, welche außer einer Lufteinblasung keine besondere zwingende Ausstattung benötigen, insbesondere keine Heizungen oder Kühlungen, keine Schutzabdeckungen, und keine besonders hochwertigen Werkstoffe. Das Anfahren dieser Zusatzbehälter kann im Ablaufprogramm für die individuelle Werkstücktype wahlweise zu- oder abgeschaltet sein, ohne dass zwischen den Chargen mit legierter und unlegierter Brünierung irgendwelche Umstellungen oder Änderungen nötig wären.

Die oben genannten Vortauchbecken können eine Titandioxid-Wasser-Suspension aufweisen, deren TiO2 unter kontinuierlicher Lufteinblasung in Schwebe gehalten wird. Wird das Lagerbauteil hier eingetaucht, wird die Oberfläche des Lagerbauteils mit Titandioxid bekeimt. Das Lagerbauteil wird dann auf direktem Wege ohne Spülen ins erste Brünierbad gefahren. Dort findet die sofortige Schichtreaktion unter Verwendung des anwesenden Titandioxid statt. Wie bei Bekeimungen vom Phosphatieren bekannt, löst sich auch diese Bekeimung nicht von der Oberfläche, wenn direkt übergehoben wird, während Zwischenspülschritte vermieden werden. Überschüssige Mengen an Titandioxid, welche sich beim Eintauchen ins Brünierbad lösen können, gehen in den Brünierbadschlamm und sind nicht schädlich. Es wurde festgestellt, dass Titandioxid im siedenden Brünierbad nicht in Schwebe gehalten werden kann, sondern sofort ausfällt. Dieses kann dann zusammen mit dem Brünierbadschlamm entsorgt werden.

Somit wird das Brünierbad in keiner Weise kontaminiert oder verschlechtert und kann jederzeit ebenso für normales Brünieren verwendet werden, ohne dass die damit erzeugte Schicht irgendwelches Ti enthalten würde. Dies hat den Vorteil, dass dasselbe Brünierbad für unterschiedliche Brüniervorgänge, mit oder ohne metallischen Zusatzelementen aus einem vorherigen Vortauchschritt, verwendet werden kann. Je nach Produkt und sonstigen Anforderungen kann dieselbe Anlage somit im Wechsel unlegierte tribologische Brünierschichten oder legierte tribologische Brünierschichten erzeugen, ohne dass sich diese Prozesse gegenseitig stören würden.

Bei einem tribologischen Wälzlagerbrünieren, wie es hier beschrieben ist, ist die Gesamtbrünierdauer auf mehrere Brünierschritte verteilt. Bei besonders langen Brünierdauern in einem Brünierbad wird der Prozess üblicherweise durch ein Zwischenabschrecken im Wasserbad unterbrochen, um sauerstoffaffine Elemente abzusättigen und die Oberfläche neu zu aktivieren. Daher kann, wie oben beschrieben, vor jedem Brünierbad und jedem Brünierschritt ein eigenes Vortauchen in einer Titandioxidsuspension, oder einer anderen Vortauchlösung mit metallischen Zusatzelementen, erfolgen. Es ist somit keine Komplizierung oder Verzögerung des Beschichtungsablaufes. Dieses Zwischentauchen führt zu einer erneuten Anreicherung auf der Oberfläche des Lagerbauteils, um Verluste des Titandioxids auszugleichen und den natürlichen Ti-Gehalt der Schicht von etwa 0,5 % wiederherzustellen.

Die in Zusammenhang mit dem Verfahren beschriebenen Merkmale gelten ebenso für das Lagerbauteil und andersherum.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

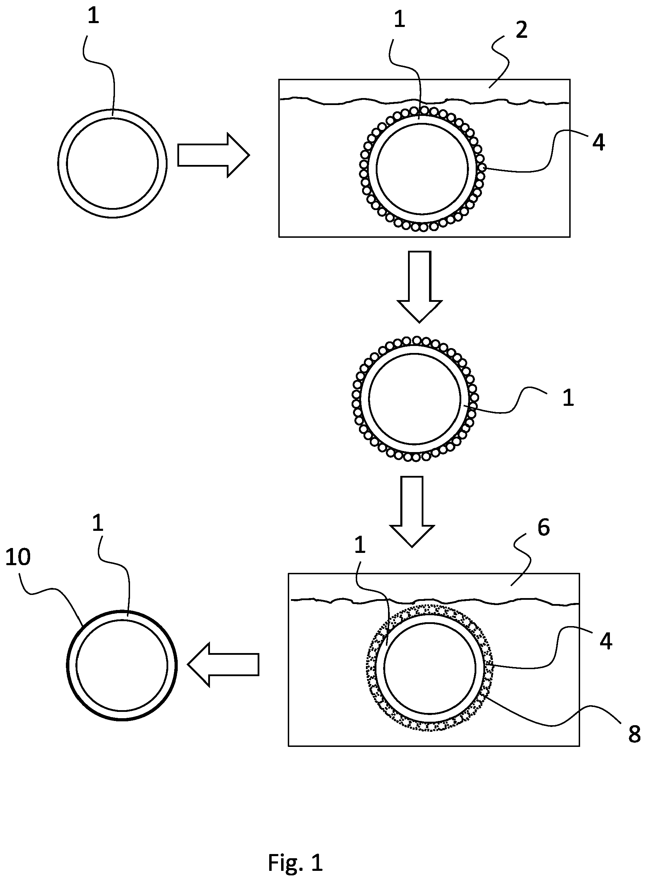

Fig. 1: einen schematischen Ablauf eines Verfahrens zum Herstellen eines Lagerbauteils.

Im Folgenden werden gleiche oder funktionell gleichwirkende Elemente mit denselben Bezugszeichen gekennzeichnet.

Fig. 1 zeigt einen möglichen schematischen Ablauf eines Verfahrens zum Herstellen eines Lagerbauteils 1 mit einer Brünierschicht 10. Das Lagerbauteil 1 ist hier beispielhaft als ein Wälzlagerring dargestellt, es kann jedoch auch jedes beliebige andere Lagerbauteil, beispielweise ein Wälzkörper, mit einer solchen Brünierschicht 10 versehen werden.

Das Lagerbauteil 1 wird zunächst in eine Vortauchlösung 2 eingetaucht, in der metallische Zusatzelemente vorliegen. Diese metallischen Zusatzelemente können beispielweise Titandioxid sein, das in einer Titandioxidsuspension in der Vortauchlösung 2 vorliegt. Durch das Eintauchen des Lagerbauteils 1 in die Vortauchlösung 2 werden die metallischen Zusatzelemente an der Oberfläche des Lagerbauteils 1 angelagert, wie hier beispielhaft durch Kügelchen 4 dargestellt ist.

Das Lagerbauteil 1 wird dann in ein Brünierbad 6 überführt. In diesem erfolgt eine Umwandlung der Lagerbauteiloberfläche in eine Brünierschicht 8. Dabei erfolgt eine Anlösung von Eisen und Eisenoxiden, die in dem Material des Lagerbauteils 1 enthalten sind, und deren ständige Wiederanlagerung und Umstrukturierung. Die metallischen Zusatzelemente 4, die bereits auf dem Lagerbauteil 1 angelagert sind, werden dabei in der Brünierschicht 8 eingelagert. Insbesondere werden die metallischen Zusatzelemente in der Struktur der Brünierschicht 8 eingebettet.

Das Vortauchen und Brünieren in der Vortauchlösung 2 und dem Brünierbad 6 kann dabei beliebig oft, vorzugsweise zwei bis dreimal, wiederholt werden. Des Weiteren kann nach jedem Brünierbad 6 ein Abschrecken des Lagerbauteils 1 erfolgen.

Nach Abschluss des Brünierens liegt dann ein Lagerbauteil 1 vor, welches eine homogene legierte Brünierschicht 10 aufweist. In dieser sind die metallischen Zusatzelemente 4 über die komplette radiale Erstreckung eingebettet und nicht als separate Elemente erkennbar. Lediglich ein eventueller Zusatzelement-Überschuss könnte sich als lokaler Konzentrationspeak zeigen, jedoch ohne funktional nachteilig zu sein. Die metallischen Zusatzelemente 4 dienen insbesondere einer Anpassung der Eigenschaften der Brünierschicht 8 und tragen nicht mit eigenen Eigenschaften bei.

Durch diese legierte Brünierschicht 10 kann insbesondere erreicht werden, dass die Eigenschaften einer Brünierschicht in Bezug auf Verschleißwiderstand und Abnutzungsgrad verbessert werden.

### Bezugszeichenliste

- 1: Lagerbauteil
- 2: Vortauchlösung
- 4: metallische Zusatzelemente
- 6: Brünierlösung
- 8: Brünierschicht
- 10: legierte Brünierschicht

## Patentansprüche

1. Lagerbauteil (1), welches eine Brünierschicht (10) aufweist,
**dadurch gekennzeichnet, dass** metallische Zusatzelemente (4) in der Struktur der Brünierschicht (10) eingebunden sind, wobei die metallischen Zusatzelemente (4) Titan und/oder Titanoxid und/oder Titaneisenoxid aufweisen.

2. Lagerbauteil nach Anspruch 1, wobei die metallischen Zusatzelemente (4) mit einem Anteil zwischen 0,1 und 1%, insbesondere zwischen 0,3 und 0,7%, der Brünierschicht (10) vorgesehen sind.

3. Lagerbauteil nach einem der vorhergehenden Ansprüche, wobei die metallischen Zusatzelemente (4) mit einem nach radial außen ansteigenden Anteil in der Brünierschicht (10) eingebunden sind.

4. Lagerbauteil nach einem der vorhergehenden Ansprüche, wobei die metallischen Zusatzelemente (4) dazu ausgebildet sind, die Eigenschaften der Brünierschicht (10) anzupassen.

5. Lagerbauteil nach einem der vorhergehenden Ansprüche, wobei das Lagerbauteil (1) ein Wälzlagerring oder ein Wälzkörper ist.

6. Verfahren zum Herstellen eines Lagerbauteils (1) nach einem der vorhergehenden Ansprüche, wobei das Verfahren die Schritte aufweist:
Anlagern von metallischen Zusatzelementen (4) auf dem Lagerbauteil (1) und
Eintauchen des Lagerbauteils (1) mit den angelagerten metallischen Zusatzelementen (4) in eine Brünierlösung (6), wobei die metallischen Zusatzelemente (4) in der Struktur der Brünierschicht (10) eingebunden werden, wobei die metallischen Zusatzelemente (4) Titan und/oder Titanoxid und/oder Titaneisenoxid aufweisen.

7. Verfahren nach Anspruch 6, wobei das Anlagern der metallischen Zusatzelemente (4) durch Eintauchen in eine Vortauchlösung (2) erfolgt.

8. Verfahren nach Anspruch 6 oder 7, wobei die Schritte des Anlagerns von metallischen Zusatzelementen (4) und Eintauchens in die Brünierlösung (6) wiederholt werden, wobei auf das Anlagern das Eintauchen in die Brünierlösung (6) folgt.

## Claims

1. Bearing component (1) having a burnishing layer (10),
**characterized in that** additional metallic elements (4) are incorporated in the structure of the burnishing layer (10), where the additional metallic elements (4) include titanium and/or titanium oxide and/or titanium iron oxide.

2. Bearing component according to Claim 1, wherein the additional metallic elements (4) are provided with a proportion between 0.1% and 1%, in particular between 0.3% and 0.7%, of the burnishing layer (10).

3. Bearing component according to either of the preceding claims, wherein the additional metallic elements (4) are incorporated in the burnishing layer (10) with a proportion that rises radially outward.

4. Bearing component according to any of the preceding claims, wherein the additional metallic elements (4) are designed to adjust the properties of the burnishing layer (10).

5. Bearing component according to any of the preceding claims, wherein the bearing component (1) is a rolling bearing ring or a rolling element.

6. Method of producing a bearing component (1) according to any of the preceding claims, wherein the method comprises the steps of:
adding additional metallic elements (4) to the bearing component (1) and immersing the bearing component (1) with the added additional metallic elements (4) into a burnishing solution (6), where the additional metallic elements (4) are incorporated in the structure of the burnishing layer (10), where the additional metallic elements (4) include titanium and/or titanium oxide and/or titanium iron oxide.

7. Method according to Claim 6, wherein the additional metallic elements (4) are added by immersion into a preliminary immersion solution (2).

8. Method according to Claim 6 or 7, wherein the steps of the adding of additional metallic elements (4) and immersing into the burnishing solution (6) are repeated, where the adding is followed by immersing into the burnishing solution (6).

## Revendications

1. Élément de palier (1) qui présente une couche de brunissage (10), **caractérisé en ce que** des éléments complémentaires métalliques (4) sont liés dans la structure de la couche de brunissage (10), les éléments complémentaires métalliques (4) présentant du titane et/ou de l'oxyde de titane et/ou de l'oxyde de titane et de fer.

2. Élément de palier selon la revendication 1, les éléments complémentaires métalliques (4) étant prévus en une proportion entre 0,1 et 1%, en particulier entre 0,3 et 0,7%, dans le couche de brunissage (10).

3. Élément de palier selon l'une des revendications précédentes, les éléments complémentaires métalliques (4) étant liés en une proportion augmentant radialement vers l'extérieur dans la couche de brunissage (10).

4. Élément de palier selon l'une des revendications précédentes, les éléments complémentaires métalliques (4) étant conçus pour adapter les propriétés de la couche de brunissage (10).

5. Élément de palier selon l'une des revendications précédentes, l'élément de palier (1) étant une bague de palier à rouleaux ou un corps de roulement.

6. Procédé pour la fabrication d'un élément de palier (1) selon l'une des revendications précédentes, le procédé comprenant les étapes de :
fixation d'éléments complémentaires métalliques (4) sur l'élément de palier (1) et immersion de l'élément de palier (1) présentant les éléments complémentaires métalliques (4) fixés dans une solution de brunissage (6), les éléments complémentaires métalliques (4) étant liés dans la structure de la couche de brunissage (10), les éléments complémentaires métalliques (4) présentant du titane et/ou de l'oxyde de titane et/ou de l'oxyde de titane et de fer.

7. Procédé selon la revendication 6, la fixation des éléments complémentaires métalliques (4) étant effectuée par immersion dans une solution de pré-immersion (2).

8. Procédé selon la revendication 6 ou 7, les étapes de fixation d'éléments complémentaires métalliques (4) et d'immersion dans la solution de brunissage (6) étant répétées, la fixation étant suivie de l'immersion dans la solution de brunissage (6).
